# EUROPEAN PATENT APPLICATION

(11) **EP 2 975 869 A1**
(43) Date of publication of application: **20.01.2016**
(21) Application number: 14782320.7
(22) Date of filing: 10.04.2014
(51) Int. Cl.: H04W 4/24

(54) **CHARGING METHOD AND SYSTEM BASED ON OPENFLOW PROTOCOL**

(30) Priority: 10.04.2013 CN 201310123149
(71) Applicant: Huawei Technologies Co., Ltd., Longgang District Shenzhen, Guangdong 518129 (CN)
(72) Inventor: LIU, Yalin, Shenzhen Guangdong 518129 (CN); WANG, Ying, Shenzhen Guangdong 518129 (CN)
(74) Representative: Körber, Martin Hans
(86) International application number: PCT/CN2014/075062
(87) International publication number: WO 2014/166405

(57) **Abstract**

Embodiments of the present invention disclose an OpenFlow-protocol-based charging method and system. The method includes: receiving, by an interface protocol OpenFlow switch between a routing control plane and a data plane; collecting, a session request, by the OpenFlow switch, charging data for the session according to a preset charging rule and by using a charging parameter obtained through an OpenFlow interface; and sending, by the OpenFlow switch, the collected charging data to a charging system, so that the charging system performs charging according to the charging data. According to the embodiments of the present invention, a charging function is added to an OpenFlow interface and an OpenFlow switch, thereby implementing application of the OpenFlow protocol in a network of an operator, especially in a mobile communications network, and enabling OpenFlow to be used for a communications network so that the communications network adapts to a new architecture and a function of a mobile network in the future.

## Description

### TECHNICAL FIELD

The present invention relates to the field of communications technologies, and in particular, to a charging method and system based on the OpenFlow protocol (an interface protocol used between a routing control plane and a data plane).

### BACKGROUND

A routing protocol, such as the Open Shortest Path First (Open Shortest Path First, OSPF) protocol, runs in a conventional router. The routing protocol can generate a routing table according to network topology information, and the routing table is a basis for route forwarding. Because the routing protocol needs to learn about information about all nodes or subnets on a network, a size of the routing table is very large. However, with development of the network, rapid expansion of the routing table leads to a routing convergence problem. When a router on the network fails, especially a router of a key node fails, the entire network may break down. An important technical cause for network breakdown is that the conventional router is dependent on routing protocols such as the OSPF routing protocol, and the router can select only one optimal route. However, because the routing table is very large, when the router fails, route convergence is very slow. Therefore, the network breakdown is caused.

Based on this, people put forward a concept of software-defined networking (Software-defined networking, SDN) whose basic idea is that control is separated from bearer, so that all intelligence is centralized on a control plane, and a bearer layer only performs forwarding and accepts control from a control layer. The SDN itself defines a network architecture that mainly includes three parts: a basic network layer, a control layer, and an application layer. In the SDN architecture, the basic network layer mainly includes routing and forwarding devices. Because a currently standardized interface between the control layer and the basic network layer uses the OpenFlow protocol, a device at the basic network layer is referred to as an OpenFlow switch. OpenFlow is a network programmable mechanism. The OpenFlow uses an OpenFlow switch located at the control layer to perform topology management, and uses an OpenFlow interface to rewrite a forwarding table of the OpenFlow switch, thereby redefining a path of a data flow. However, extended use of the OpenFlow protocol is insufficient in the prior art.

### SUMMARY

Embodiments of the present invention provide an OpenFlow-protocol-based charging method and system, which can meet a charging requirement.

To resolve the foregoing technical problem, the embodiments of the present invention disclose the following technical solutions:

According to a first aspect, an OpenFlow-protocol-based charging method is provided, including:
receiving, by an interface protocol OpenFlow switch between a routing control plane and a data plane, a session request;
collecting, by the OpenFlow switch, charging data for the session according to a preset charging rule and by using a charging parameter obtained through an OpenFlow interface; and
sending, by the OpenFlow switch, the collected charging data to a charging system, so that the charging system performs charging according to the charging data.

With reference to the foregoing first aspect, in a first possible implementation manner, the sending, by the OpenFlow switch, the collected charging data to a charging system includes:
sending, by the OpenFlow switch, the collected charging data to an OpenFlow controller; and sending the charging data to the charging system through the OpenFlow controller,.

With reference to the foregoing first aspect and/or the first possible implementation manner, in a second possible implementation manner, the charging parameter includes:
identification information ID of a flow to be charged and information about the flow, a charging mode, a charging type, a charging amount, and a charging data reporting manner.

With reference to the foregoing first aspect and/or the first possible implementation manner and/or the second possible implementation manner, in a third possible implementation manner, the collecting, by the OpenFlow switch, charging data for the session according to a charging parameter obtained in advance includes:
adding, by the OpenFlow switch according to a charging ID of the session and the ID of the flow to be charged, the charging parameter of the session to a charging table corresponding to the charging ID of the session and the ID of the flow to be charged, where different users correspond to different charging IDs, each charging ID corresponds to one charging table, or each charging ID corresponds to a plurality of charging tables and each flow ID of a same charging ID corresponds to one charging table.

With reference to the foregoing first aspect and/or the first possible implementation manner and/or the second possible implementation manner and/or the third possible implementation manner, in a fourth possible implementation manner, the charging table includes at least the following fields:
a charging ID, a flow ID, a charging mode, a flow type, and a counter.

With reference to the foregoing first aspect and/or the first possible implementation manner and/or the second possible implementation manner and/or the third possible implementation manner and/or the fourth possible implementation manner, in a fifth possible implementation manner, the OpenFlow switch is an OpenFlow wireless access device or an OpenFlow gateway router.

According to a second aspect, an OpenFlow-protocol-based charging system is provided, including an OpenFlow controller, an OpenFlow switch, and a charging subsystem, where:
the OpenFlow controller is configured to deliver a charging parameter to the OpenFlow switch according to a preset charging rule;
the OpenFlow switch is configured to receive a session request, collect charging data for the session according to the charging parameter delivered by the OpenFlow controller, and send the collected charging data to the charging subsystem; and
the charging subsystem is configured to perform charging according to the charging data sent by the OpenFlow switch.

With reference to the foregoing second aspect, in a first possible implementation manner, the charging parameter includes:
identification information ID of a flow to be charged and information about the flow, a charging mode, a charging type, a charging amount, and a charging data reporting manner.

With reference to the foregoing second aspect and/or the first possible implementation manner, in a second possible implementation manner, the OpenFlow switch is specifically configured to add, according to a charging ID of the session and the ID of the flow to be charged, the charging parameter of the session to a charging table corresponding to the charging ID of the session and the ID of the flow to be charged, where different users correspond to different charging IDs, each charging ID corresponds to one charging table, or each charging ID corresponds to a plurality of charging tables and each flow ID of a same charging ID corresponds to one charging table.

With reference to the foregoing second aspect and/or the first possible implementation manner and/or the second possible implementation manner, in a third possible implementation manner, the charging table includes at least the following fields:
a charging ID, a flow ID, a charging mode, a flow type, and a counter.

With reference to the foregoing second aspect and/or the first possible implementation manner and/or the second possible implementation manner and/or the third possible implementation manner, in a fourth possible implementation manner, the OpenFlow switch is an OpenFlow wireless access device or an OpenFlow gateway router.

According to a third aspect, an OpenFlow-protocol-based charging system is further provided, including an OpenFlow controller, an OpenFlow switch, and a charging subsystem, where:
the OpenFlow controller is configured to deliver a charging parameter to the OpenFlow switch according to a preset charging rule, and send charging data collected by the OpenFlow switch to the charging subsystem;
the OpenFlow switch is configured to receive a session request, collect charging data for the session according to the charging parameter delivered by the OpenFlow controller, and send the collected charging data to the OpenFlow controller; and
the charging subsystem is configured to perform charging according to the charging data sent by the OpenFlow controller.

With reference to the foregoing third aspect, in a first possible implementation manner, the charging parameter includes:
identification information ID of a flow to be charged and information about the flow, a charging mode, a charging type, a charging amount, and a charging data reporting manner.

With reference to the foregoing third aspect and/or the first possible implementation manner, in a second possible implementation manner, the OpenFlow switch is specifically configured to add, according to a charging ID of the session and the ID of the flow to be charged, the charging parameter of the session to a charging table corresponding to the charging ID of the session and the ID of the flow to be charged, where different users correspond to different charging IDs, each charging ID corresponds to one charging table, or each charging ID corresponds to a plurality of charging tables and each flow ID of a same charging ID corresponds to one charging table.

With reference to the foregoing third aspect and/or the first possible implementation manner and/or the second possible implementation manner, in a third possible implementation manner, the charging table includes at least the following fields:
a charging mode, a flow type, and a counter.

With reference to the foregoing third aspect and/or the first possible implementation manner and/or the second possible implementation manner and/or the third possible implementation manner, in a fourth possible implementation manner, the OpenFlow switch is an OpenFlow wireless access device or an OpenFlow gateway router.

According to the embodiments of the present invention, a charging function is added on the basis of an OpenFlow interface and an OpenFlow switch, thereby implementing application of the OpenFlow protocol in a network of an operator, especially in a mobile communications network, and enabling OpenFlow to be used for a communications network so that the communications network adapts to a new architecture and a function of a mobile network in the future.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, a person of ordinary skill in the art may still derive other drawings from these accompanying drawings without creative efforts.
FIG. 1 is a flowchart of an OpenFlow-protocol-based charging method according to an embodiment of the present invention;
FIG. 2 is a flowchart of immediate event charging according to an embodiment of the present invention;
FIG. 3 is a flowchart of session charging based on unit reservation according to an embodiment of the present invention;
FIG. 4 is a schematic diagram of a charging table according to an embodiment of the present invention;
FIG. 5a is a schematic diagram of an OpenFlow flow table defined in the prior art;
FIG. 5b is a schematic diagram of an OpenFlow flow table according to an embodiment of the present invention;
FIG. 5c is a schematic diagram of charging fields in an OpenFlow flow table shown in FIG. 5b;
FIG. 6 is a schematic structural diagram of an OpenFlow-protocol-based charging system according to an embodiment of the present invention;
FIG. 7 is a schematic structural diagram of an another OpenFlow-protocol-based charging system according to an embodiment of the present invention;
FIG. 8 is a schematic structural diagram of another OpenFlow-protocol-based charging system according to an embodiment of the present invention; and
FIG. 9 is a schematic structural diagram of another OpenFlow-protocol-based charging system according to an embodiment of the present invention.

### DESCRIPTION OF EMBODIMENTS

To make a person skilled in the art understand the technical solutions in the embodiments of the present invention better, and make the objectives, features, and advantages of the embodiments of the present invention clearer, the following further describes the technical solutions in the embodiments of the present invention in detail with reference to the accompanying drawings.

It should be noted that, "flow" described in the embodiments of the present invention refers to several data packets sent or received from a node. Generally, data packets having a same type of characteristics are categorized as one flow.

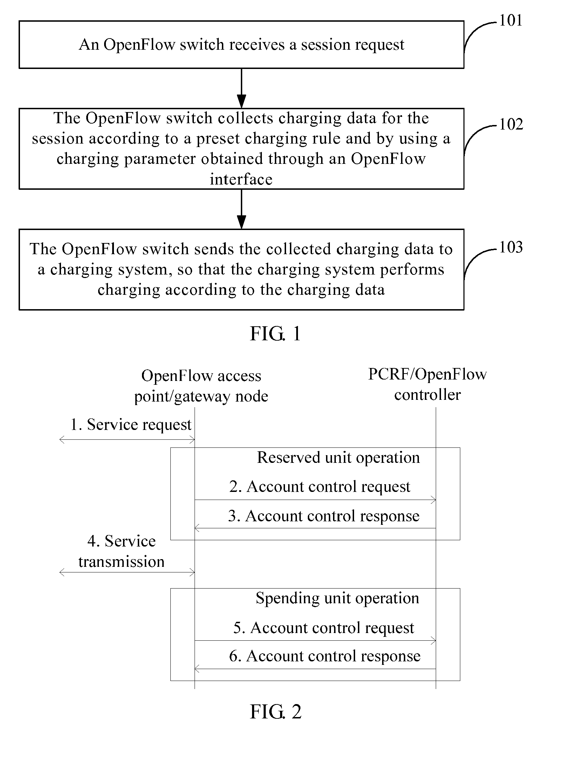

Referring to FIG. 1, FIG. 1 is a method flowchart of an OpenFlow-protocol-based charging method according to an embodiment of the present invention.

The method may include:

Step 101: An OpenFlow switch receives a session request.

The OpenFlow switch may be an OpenFlow gateway router or an OpenFlow wireless access device that supports an OpenFlow function, where the OpenFlow gateway router is mainly responsible for collecting outgoing user data, and the OpenFlow wireless access device is mainly responsible for collecting data of communication between users in a mobile system. Subsequent steps are performed after the OpenFlow switch receives the session request.

Step 102: The OpenFlow switch collects charging data for the session according to a preset charging rule and by using a charging parameter obtained through an OpenFlow interface.

In the prior art, charging control information is controlled by a policy and charging rules function (Policy Control and Charging Rule Function, PCRF) unit. In this embodiment of the present invention, because there is no direct interface between the PCRF and the OpenFlow switch, policy control and the like of the PCRF are all reflected on flow table control of OpenFlow. To keep unicity of interfaces of a control plane and a data plane of a network, the OpenFlow protocol needs to support charging parameter control. That is, a charging rule that can be communicated between the PCRF and the OpenFlow switch needs to be preset.

Specifically, to preset the charging rule that can be communicated, OpenFlow needs to support an operation control function of the PCRF, which specifically includes:

Charging-Rule-Install (Charging-Rule-Install): used to activate, install, and modify the charging rule.

Charging-Rule-Remove (Charging-Rule-Remove): used to deactivate or delete the charging rule.

Charging-Rule-Report (Charging-Rule-Report): used to report a status of the charging rule, including whether the rule is successfully installed, deleted, modified, and the like.

When the foregoing charging rule is being installed, the charging parameter of the OpenFlow may be delivered by a controller, such as an OpenFlow controller, to the OpenFlow switch through the OpenFlow interface.

The charging parameter may include:
an ID of a flow to be charged and information about the flow;
a charging mode: online charging or offline charging;
a charging type: traffic-based charging or duration-based charging;
a charging amount: an amount of traffic or duration that can be used;
a charging data reporting manner: regular reporting or event triggering. In the case of event triggering, a trigger event needs to be defined. In the case of regular reporting, a time interval, a start time, and the like need to be determined.

Certainly, the charging parameter may also be set according to a specific charging rule, which is not specifically limited herein.

Step 103: The OpenFlow switch sends the collected charging data to a charging system, so that the charging system performs charging according to the charging data.

After collecting the charging data corresponding to each charging parameter, the OpenFlow switch may send, based on different architectures, the charging data to the charging system in a plurality of manners. The charging system may be an online charging system (Online Charging System, OCS), or an offline charging system (Offline Charging System, OFCS). A process in which the charging system performs charging according to the charging data is similar to that in the prior art, which is not described herein again.

In another embodiment, according to a charging rule, when a requirement of an event is met in a charging process, an OpenFlow switch needs to report a current status. For example, when a charging amount of a user reaches a specific limit, the OpenFlow switch may report this situation to an OpenFlow controller, so as to determine a further action.

According to the embodiment of the present invention, a charging function is added on the basis of an OpenFlow interface and an OpenFlow switch, thereby implementing application of the OpenFlow protocol in a network of an operator, especially in a mobile communications network, so that the OpenFlow may be used for a communications network, which enables the communications network to adapt to a new architecture and function of a mobile network in the future.

In another embodiment of the present invention, a process in which the OpenFlow switch sends collected charging data to a charging system may be implemented in the following two manners:

Manner 1: The OpenFlow switch directly sends the collected charging data to the charging system through a conventional interface of the charging system between the OpenFlow switch and the charging system according to a preset charging rule.

In this manner, the conventional interface of the charging system needs to be added to the OpenFlow switch, that is, a charging rule that can be communicated between the PCRF and the OpenFlow switch needs to be preset. After obtaining the charging data, the OpenFlow switch may send the charging data to the charging system through the conventional interface.

Manner 2: The OpenFlow switch sends the collected charging data to an OpenFlow controller by using the OpenFlow interface, and the OpenFlow controller sends the charging data to the charging system.

In manner 2, the conventional interface of the charging system does not need to be used, and charging control may be implemented by using only OpenFlow interfaces. Because an OpenFlow protocol interface supports reporting of many statuses and statistics information of the OpenFlow, the OpenFlow interface may support a charging function after the interface is slightly extended. After obtaining the charging data, the OpenFlow switch may send the charging data to the OpenFlow controller through the extended OpenFlow interface, and the OpenFlow controller then sends the charging data to the charging system.

Compared with manner 1, in manner 2, the interface is uniform, so that a gateway function may be well compatible with the OpenFlow switch, without requiring support of additional interfaces. But the OpenFlow controller (or a network controller) needs to exchange with the charging system to implement charging control.

In manner 2, the OpenFlow interface needs to support a Credit (account) request function. To support this function, the OpenFlow interface needs to support several scenarios of Diameter: immediate event charging, event charging based on unit reservation and session charging based on unit reservation (for details, reference may be made to 3GPP 32.299).

FIG. 2 shows a procedure of immediate event charging. After an OpenFlow access node/gateway node receives a service request in step 1, in step 2 of a reserved unit operation, the OpenFlow access node/gateway node sends a Credit control request to the PCRF/OpenFlow controller, where the Credit request is mainly used for request control. In step 3, a response message of the PCRF/OpenFlow controller includes an authorized service unit, price information, remaining fund information, and the like. In step 5, the OpenFlow access node/gateway node initiates the Credit control request when a session terminates, where the request carries used quantity information, so that the charging system may perform charging. In step 6, feedback information of the PCRF/OpenFlow controller, such as fee information, remaining sum, and the like are included.

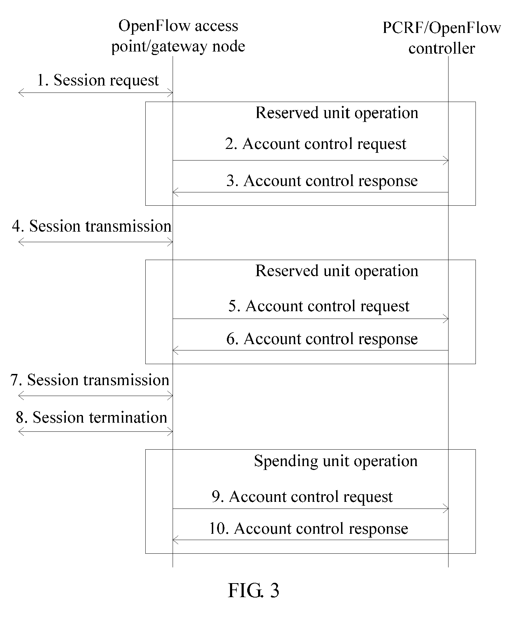

A process of event charging based on unit reservation is the same as a process of immediate event charging, except that a message type is different. FIG. 3 shows a process of session charging based on unit reservation.

In step 3, parameters used to control account fee of a user are included, such as a Validity-Time (Validity-Time) parameter and a Low-Balance-Indication (Low-Balance-Indication) parameter. In step 5, when a charging unit exceeds specified effective time, an OpenFlow wireless access point and an OpenFlow gateway router need to send an update request to the charging system to report used time or data amount. In step 6, the charging system returns a new authorized service unit, rate information and new credit balance information. In step 9, when the session ends, the OpenFlow wireless access point and the OpenFlow gateway router need to report information such as the used data amount, duration, and the like. In step 10, the rate information and the new credit balance information are included.

By using the foregoing process, the OpenFlow protocol can support parameters and procedures related to the foregoing process. The OpenFlow protocol needs to support the following specific parameters:
request type: includes an initial request, an update request and a termination request;
used unit information, such as validity time, a data amount, and the like;
fee information: different quality of service (Quality of Service, QoS) levels correspond to different rates;
authorized service unit: information such as time, data amount, and the like that can be used;
remaining credit balance: information about credit that can be used.

In another embodiment of the present invention, a process in which an OpenFlow switch collects charging data for a session according to a charging parameter delivered by an OpenFlow controller may specifically include that:

The OpenFlow switch adds, according to a charging ID of the session and an ID of a flow to be charged, a charging parameter of the session to a charging table corresponding to the charging ID of the session and the ID of the flow to be charged.

Different users correspond to different charging IDs. In addition, each charging ID corresponds to one charging table, or each charging ID corresponds to a plurality of charging tables and each flow ID of a same charging ID corresponds to one charging table.

In this embodiment, to implement a charging function for the OpenFlow switch, a new table, that is, a charging table (Charging Table) may be added. The charging table may be set in a plurality of manners, for example:

Manner 1: For a charging user, a plurality of flows may exist. For example, a QoS type of each flow may be different. Therefore, a case in which a plurality of flows use a same charging table to perform charging may exist.

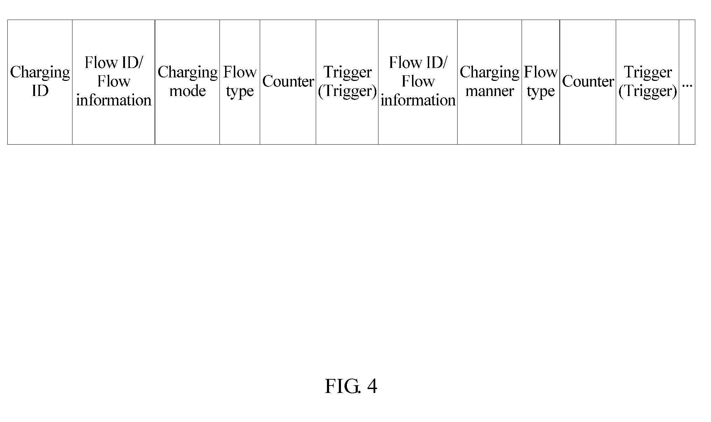

In this case, user charging is associated with only one charging table, but a specific flow needs to be associated with its corresponding data flow. As shown in FIG. 4, the charging table may include the following fields: a charging ID, a flow ID/flow information, a charging mode, a flow type, a counter, and the like. Certainly, the charging table may further include another field or some fields of the foregoing fields, and an order of arranging the fields in the charging table is not limited to that shown in FIG. 4.

### Meaning of each field is as follows:

Charging ID: an identification number that uniquely identifies user charging information in an OpenFlow switch, which is used to distinguish users. This is a mandatory field and a recommended field length is 32 bits.

Flow ID (or flow information): because each flow table entry of each flow table in the OpenFlow switch currently does not include ID information, to distinguish each flow, one ID needs to be allocated to each flow to identify the flow. If an OpenFlow switch supports or is added with this function, the flow ID may be used to distinguish the flow. Otherwise, flow matching needs to be performed by using the flow information. The flow information refers to information about a service flow, which specifically includes a source IP address, a destination IP address, a remote TCP port, a destination TCP port, and service layer information of the service flow, even includes lower-layer information, such as a VLAN tag and a MPLS tag, which specifically depends on a charging configuration requirement. If a flow entry of OpenFlow does not support a flow ID identification function, an ID may also be allocated to a flow of each user to simplify charging configuration. However, when charging is performed, charging data statistics can be implemented merely by associating the service flow of the user with the charging ID and the flow ID.

Charging mode: identifies whether a charging mode of the flow is time-based charging or traffic-based charging. Even if the flow is of a same quality classification identifier (Quality Classification Identifier, QCI), a used charging mode is different in some cases. In this case, different charging information needs to be collected.

Flow type: used to identify a QoS type (QCI) to which a flow belongs. At present, 3GPP LTE defines nine different types of services. In practical charging, different types of services may use a same charging mode. The field is mainly used as a statistical reference when a charging server generates charging information.

Counter: A counter is mainly used to collect statistics on a flow to obtain a statistical amount of the flow. Its unit may be time or number of bytes, which varies according to the charging mode.

Trigger (Trigger): Trigger is mainly used to trigger charging reporting. When specific time or traffic is accumulated for a flow, the OpenFlow switch needs to be triggered to report the charging parameter to the charging server. This parameter may also not be included in this table, but there must be another place in the OpenFlow switch to implement a trigger function. In addition, the switch further needs to implement configuration of charging information of each flow, including trigger duration of the charging report, a traffic unit, and the like.

Since one user may have a plurality of flows, for the foregoing information, one entry needs to be configured for each flow. The OpenFlow switch supporting the charging function needs to support insertion and deletion of a flow charging entry. That is, one charging ID corresponds to charging entries of a plurality of flows and operations such as insertion, deletion, activation, and deactivation can be performed on the charging entries of each flow.

When charging needs to be performed for a service flow of a user, an ID of the flow of the user to be charged is associated with a corresponding entry of the flow table of OpenFlow to collect statistics on the charging data. Therefore, one flow is associated with at least one flow ID.

According to a configured reporting manner, when a trigger threshold is reached, the OpenFlow switch sends a request (credit control request) message to a charging system.

Manner 2: Each user corresponds to one charging ID, one charging table is configured for each flow, and the relationships between flow tables are not correlated. That is, each charging ID corresponds to a plurality of charging tables and each flow ID of a same charging ID corresponds to one charging table.

For example, when a charging table is defined, a charging flow table may be defined for a type of service. Therefore, one user may have a plurality of charging flow tables and each flow table corresponds to a different type of service. Certainly, according to manner 1, one user may also have only one flow table, and statistics of charging data of different services is collected by using different counters in the table, which facilitates user information management, and the like.

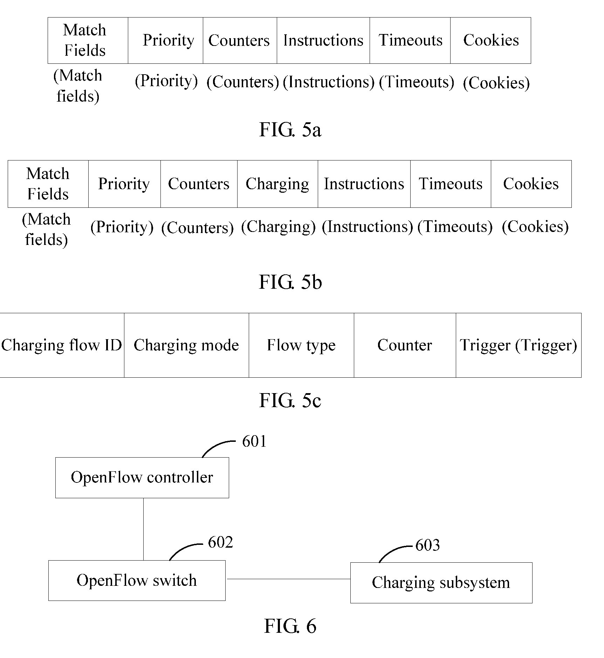

If a solution in manner 2 is adopted, the charging table can be integrated into an OpenFlow flow table as a directly embedded charging function. FIG. 5a is a format of an OpenFlow flow table defined in the prior art, which may include match fields (Match Fields), a priority (Priority), counters (Counters), instructions (instructions), timeouts (Timeouts), cookies (Cookies), and the like. In this embodiment, after the charging function is added, the OpenFlow flow table may be shown in FIG. 5b, where a charging (Charging) field is added to the original OpenFlow flow table.

A position of the charging field in FIG. 5b is only exemplary, which may be changed. Specifically, the charging field may also include fields shown in FIG. 5c, including a charging ID, a charging mode, a flow type, a counter and a Trigger. Certainly, the charging field may further include another field or some fields of the foregoing fields shown in FIG. 5c, and an order of arranging the fields in the table is not limited to that shown in FIG. 5c.

For simplicity of implementing a charging operation, the field includes a flow ID, which uniquely identifies a charging flow. If the flow ID function is added to the OpenFlow flow table itself, this field may be omitted.

After this solution is adopted, the OpenFlow controller or the charging system itself associates the charging flow with the user so that the flow corresponds to each user. If one user has a plurality of flows at the same time, charging statistics reporting is independently triggered for each flow.

Adding the foregoing new charging table function in the OpenFlow switch can implement collection and statistics of the charging data more easily.

The foregoing method embodiment not only can be applied to OpenFlow-based charging statistics in an SDN architecture used in a future network, but also can be further applied to any OpenFlow switch that needs to support a charging function.

The foregoing describes the method embodiments of the present invention, and the following introduces a system for implementing the foregoing methods.

Referring to FIG. 6, FIG. 6 is a schematic structural diagram of an OpenFlow-protocol-based charging system according to an embodiment of the present invention.

The system may include an OpenFlow controller 601, an OpenFlow switch 602, and a charging subsystem 603.

The OpenFlow controller 601 is configured to deliver a charging parameter to the OpenFlow switch 602 according to a preset charging rule.

The OpenFlow switch 602 is configured to receive a session request; collect charging data for the session according to the charging parameter delivered by the OpenFlow controller 601, and send the collected charging data to the charging subsystem 603.

The charging subsystem 603 is configured to perform charging according to the charging data sent by the OpenFlow switch 602.

It should be noted that in the prior art, charging control information is controlled by a policy and charging rules function (Policy Control and Charging Rule Function, PCRF) unit. In this embodiment of the present invention, because there is no direct interface between the PCRF and the OpenFlow switch, policy control and the like of the PCRF are all reflected on flow table control of OpenFlow. To keep unicity of interfaces of a control plane and a data plane of a network, the OpenFlow protocol needs to support charging parameter control. That is, a charging rule that can be communicated between the PCRF and the OpenFlow switch needs to be preset.

Specifically, to preset the charging rule that can be communicated, OpenFlow needs to support an operation control function of the PCRF, which specifically includes:

Charging-Rule-Install (Charging-Rule-Install): used to activate, install, and modify the charging rule.

Charging-Rule-Remove (Charging-Rule-Remove): used to deactivate or delete the charging rule.

Charging-Rule-Report (Charging-Rule-Report): used to report a status of the charging rule, including whether the rule is successfully installed, deleted, modified, and the like.

When the foregoing charging rule is being installed, the charging parameter of the OpenFlow may be delivered by a controller, such as an OpenFlow controller, to an OpenFlow switch through an OpenFlow interface.

The charging parameter may include:
an ID of a flow to be charged and information about the flow;
a charging mode: online charging or offline charging;
a charging type: traffic-based charging or duration-based charging;
a charging amount: an amount of traffic or duration that can be used; and
a charging data reporting manner: regular reporting or event triggering. In the case of event triggering, a trigger event needs to be defined. In the case of regular reporting, a time interval, a start time, and the like need to be determined.

Certainly, the charging parameter may also be set according to a specific charging rule, which is not specifically limited herein.

According to this embodiment of the present invention, a charging function is added on the basis of an OpenFlow switch, thereby implementing application of the OpenFlow protocol in a network of an operator, especially in a mobile communications network, and significantly simplifying complexity of a current mobile gateway so as to adapt to a new architecture and function of a mobile network in the future.

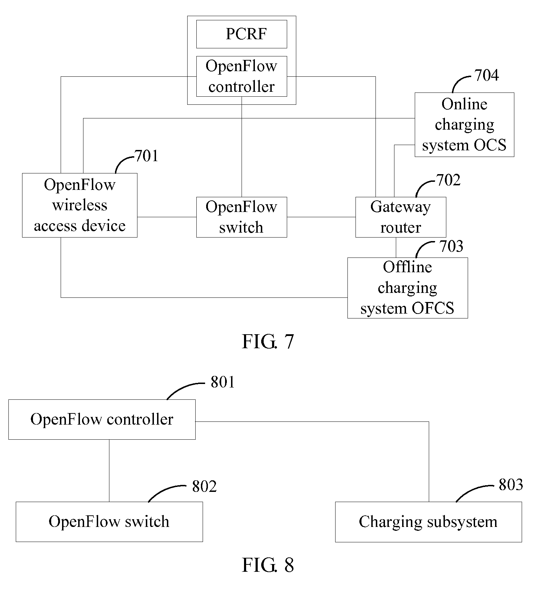

In a specific embodiment, as shown in FIG. 7, the OpenFlow switch may include an OpenFlow wireless access device 701 and an OpenFlow gateway router 702. The charging subsystem may include an OFCS 703 and an OCS 704.

A conventional interface of a charging system is disposed on the OpenFlow wireless access device 701, where the OpenFlow wireless access device 701 connects to the OFCS 703 and the OCS 704 simultaneously through the conventional interface, and is mainly responsible for collecting communication data between users in a mobile system. A conventional interface of a charging system is also disposed on the OpenFlow gateway router 702, where the OpenFlow gateway router 702 also connects to the OFCS 703 and the OCS 704 simultaneously through the conventional interface, and is mainly responsible for collecting outgoing user data.

Because there is no direct interface between the PCRF and the OpenFlow switch, policy control and the like of the PCRF are all reflected on flow table control of OpenFlow. To keep unicity of interfaces of a control plane and a data plane of a network, the OpenFlow protocol needs to support charging parameter control. The PCRF may be located inside an OpenFlow controller, and the OpenFlow controller delivers a charging parameter to the OpenFlow wireless access device 701 and the OpenFlow gateway router 702, where the charging parameter may include: identification information ID of a flow to be charged and information about the flow, a charging mode, a charging type, a charging amount, and a charging data reporting manner.

According to a preset charging rule, after receiving a session request, the OpenFlow wireless access device 701 or the OpenFlow gateway router 702 may collect charging data according to the charging parameter delivered by the OpenFlow controller, and then send the collected charging data to the OFCS 703 or the OCS 704 through the conventional interface of the charging system. The OFCS 703 or the OCS 704 performs charging.

In another embodiment, a charging table may be set inside the foregoing OpenFlow switch, such as an OpenFlow wireless access device and an OpenFlow gateway router. After collecting charging data, the OpenFlow switch may add, according to a charging ID of the session and an ID of a flow to be charged, a charging parameter of the session to a charging table corresponding to the charging ID of the session and the ID of the flow to be charged, where different users correspond to different charging IDs, each charging ID corresponds to one charging table, or each charging ID corresponds to a plurality of charging tables and each flow ID of a same charging ID corresponds to one charging table. The charging table may further include fields: a charging mode, a flow type, and a counter. For specific content and setting of the charging table, refer to corresponding description of the foregoing method embodiment.

Referring to FIG. 8, FIG. 8 is another schematic structural diagram of an OpenFlow-protocol-based charging system according to an embodiment of the present invention.

The system may also include an OpenFlow controller 801, an OpenFlow switch 802, and a charging subsystem 803.

According to a preset charging rule, the OpenFlow controller 801 is configured to deliver a charging parameter to the OpenFlow switch 802 and send charging data collected by the OpenFlow switch 802 to the charging subsystem 803.

The OpenFlow switch 802 is configured to receive a session request; collect charging data for the session according to the charging parameter delivered by the OpenFlow controller 801, and send the collected charging data to the OpenFlow controller 801.

The charging subsystem 803 is configured to perform charging according to the charging data sent by the OpenFlow controller 801.

According to this embodiment of the present invention, a charging function is added on the basis of an OpenFlow switch, thereby implementing application of the OpenFlow protocol in a network of an operator, especially in a mobile communications network, and significantly simplifying complexity of a current mobile gateway so as to adapt to a new architecture and function of a mobile network in the future.

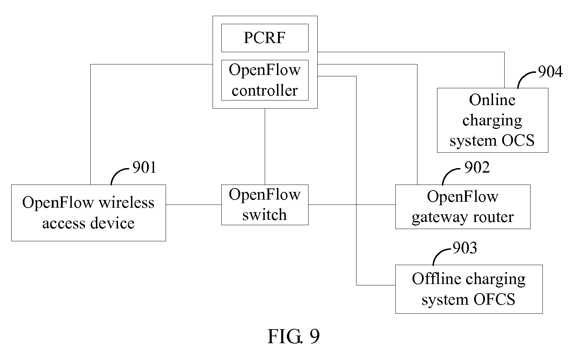

In a specific embodiment, as shown in FIG. 9, the OpenFlow switch may include an OpenFlow wireless access device 901 and an OpenFlow gateway router 902. The charging subsystem may include an OFCS 903 and an OCS 904.

Because there is no direct interface between the PCRF and the OpenFlow switch, policy control and the like of the PCRF are all reflected on flow table control of OpenFlow. To keep unicity of interfaces of a control plane and a data plane of a network, the OpenFlow protocol needs to support charging parameter control. The PCRF may be located inside an OpenFlow controller, and the OpenFlow controller delivers a charging parameter to the OpenFlow wireless access device 901 and the OpenFlow gateway router 902, where the charging parameter may include: identification information ID of a flow to be charged and information about the flow, a charging mode, a charging type, a charging amount, and a charging data reporting manner.

A function unit is further required in the OpenFlow controller to complete interaction with the charging subsystems OFCS 903 and OCS 904, and meanwhile implement interaction with an OpenFlow device.

Both the OpenFlow wireless access device 901 and the OpenFlow gateway router 902 connect to the OpenFlow controller through an OpenFlow interface.

According to a preset charging rule, after receiving a session request, the OpenFlow wireless access device 901 or the OpenFlow gateway router 902 may collect charging data according to the charging parameter delivered by the OpenFlow controller, and then send the collected charging data to the OpenFlow controller through an OpenFlow interface. The OpenFlow controller then sends the charging data to the OFCS 903 or the OCS 904. The OFCS 903 or the OCS 904 performs charging.

In another embodiment, a charging table may be set inside the foregoing OpenFlow switch, such as an OpenFlow wireless access device and an OpenFlow gateway router. After collecting charging data, the OpenFlow switch may add, according to a charging ID of the session and an ID of a flow to be charged, a charging parameter of the session to a charging table corresponding to the charging ID of the session and the ID of the flow to be charged, where different users correspond to different charging IDs, each charging ID corresponds to one charging table, or each charging ID corresponds to a plurality of charging tables and each flow ID of a same charging ID corresponds to one charging table. The charging table may further include fields: a charging ID, a flow ID, a charging mode, a flow type, and a counter. For specific content and setting of the charging table, reference may be made to corresponding description of the foregoing method embodiment.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An OpenFlow-protocol-based charging method, comprising:
receiving, by an interface protocol OpenFlow switch between a routing control plane and a data plane, a session request through;
collecting, by the OpenFlow switch, charging data for the session according to a preset charging rule and by using a charging parameter obtained through an OpenFlow interface; and
sending, by the OpenFlow switch, the collected charging data to a charging system, so that the charging system performs charging according to the charging data.

2. The method according to claim 1, wherein the sending, by the OpenFlow switch, the collected charging data to a charging system comprises:
sending, by the OpenFlow switch, the collected charging data to an OpenFlow controller; and sending the charging data to the charging system through the OpenFlow controller.

3. The method according to claim 1 or 2, wherein the charging parameter comprises:
identification information ID of a flow to be charged and information about the flow, a charging mode, a charging type, a charging amount, and a charging data reporting manner.

4. The method according to any one of claims 1 to 3, wherein the collecting, by the OpenFlow switch, charging data for the session according to a preset charging rule and by using a charging parameter obtained through an OpenFlow interface comprises:
adding, by the OpenFlow switch according to a charging ID of the session and an ID of a flow to be charged, the charging parameter of the session to a charging table corresponding to the charging ID of the session and the ID of the flow to be charged, wherein different users correspond to different charging IDs, each charging ID corresponds to one charging table, or each charging ID corresponds to a plurality of charging tables and each flow ID of a same charging ID corresponds to one charging table.

5. The method according to claim 4, wherein the charging table comprises at least the following fields:
a charging ID, a flow ID, a charging mode, a flow type, and a counter.

6. The method according to any one of claims 1 to 5, wherein the OpenFlow switch is an OpenFlow wireless access device or an OpenFlow gateway router.

7. An OpenFlow-protocol-based charging system, comprising an OpenFlow controller, an OpenFlow switch, and a charging subsystem, wherein:
the OpenFlow controller is configured to deliver a charging parameter to the OpenFlow switch according to a preset charging rule;
the OpenFlow switch is configured to receive a session request, collect charging data for the session according to the charging parameter delivered by the OpenFlow controller, and send the collected charging data to the charging subsystem; and
the charging subsystem is configured to perform charging according to the charging data sent by the OpenFlow switch.

8. The system according to claim 7, wherein the charging parameter comprises:
identification information ID of a flow to be charged and information about the flow, a charging mode, a charging type, a charging amount, and a charging data reporting manner.

9. The system according to claim 7 or 8, wherein
the OpenFlow switch is specifically configured to add, according to a charging ID of the session and an ID of a flow to be charged, the charging parameter of the session to a charging table corresponding to the charging ID of the session and the ID of the flow to be charged, wherein different users correspond to different charging IDs, each charging ID corresponds to one charging table, or each charging ID corresponds to a plurality of charging tables and each flow ID of a same charging ID corresponds to one charging table.

10. The system according to claim 9, wherein the charging table comprises at least the following fields:
a charging ID, a flow ID, a charging mode, a flow type, and a counter.

11. The system according to any one of claims 7 to 10, wherein the OpenFlow switch is an OpenFlow wireless access device or an OpenFlow gateway router.

12. An OpenFlow-protocol-based charging system, comprising an OpenFlow controller, an OpenFlow switch, and a charging subsystem, wherein:
the OpenFlow controller is configured to deliver a charging parameter to the OpenFlow switch according to a preset charging rule, and send charging data collected by the OpenFlow switch to the charging subsystem;
the OpenFlow switch is configured to receive a session request, collect charging data for the session according to the charging parameter delivered by the OpenFlow controller, and send the collected charging data to the OpenFlow controller; and
the charging subsystem is configured to perform charging according to the charging data sent by the OpenFlow controller.

13. The system according to claim 12, wherein the charging parameter comprises:
identification information ID of a flow to be charged and information about the flow, a charging mode, a charging type, a charging amount, and a charging data reporting manner.

14. The system according to claim 12 or 13, wherein
the OpenFlow switch is specifically configured to add, according to a charging ID of the session and the ID of the flow to be charged, the charging parameter of the session to a charging table corresponding to the charging ID of the session and the ID of the flow to be charged, wherein different users correspond to different charging IDs, each charging ID corresponds to one charging table, or each charging ID corresponds to a plurality of charging tables and each flow ID of a same charging ID corresponds to one charging table.

15. The system according to claim 14, wherein the charging table comprises at least the following fields:
a charging ID, a flow ID, a charging mode, a flow type, and a counter.

16. The system according to any one of claims 12 to 15, wherein the OpenFlow switch is an OpenFlow wireless access device or an OpenFlow gateway router.
